Europäisches Patentamt

European Patent Office

Office européen des brevets

(11) Veröffentlichungsnummer: **0 129 266 B1**

(12) **EUROPÄISCHE PATENTSCHRIFT**

(45) Veröffentlichungstag der Patentschrift:
28.10.87

(21) Anmeldenummer: **84200688.4**

(22) Anmeldetag: **15.05.84**

(51) Int. Cl.⁴: **F 02 F 3/12, B 22 D 19/14, B 22 D 19/02, C 22 C 1/09**

(54) Aus einer Aluminiumlegierung gegossener Kolben für Brennkraftmaschinen.

(30) Priorität: **11.06.83 DE 3321212**

(43) Veröffentlichungstag der Anmeldung:
**27.12.84 Patentblatt 84/52**

(45) Bekanntmachung des Hinweises auf die Patenterteilung:
**28.10.87 Patentblatt 87/44**

(84) Benannte Vertragsstaaten:
**DE GB**

(56) Entgegenhaltungen:
**EP - A - 0 080 562**
**GB - A - 1 214 852**
**GB - A - 1 478 943**
**GB - A - 2 080 865**
**US - A - 4 245 611**
**US - A - 4 318 438**

(73) Patentinhaber: **KOLBENSCHMIDT Aktiengesellschaft, Christian-Schmidt-Strasse 8/12 Postfach 1351, D-7107 Neckarsulm (DE)**

(72) Erfinder: **Sander, Wilfried, Reutlinger Strasse 60, D-7107 Neckarsulm (DE)**
Erfinder: **Mielke, Siegfried, Dr., Mergentheimer Strasse 8, D-7107 Neckarsulm (DE)**
Erfinder: **Eschenweck, Dieter, Dr., Friedrich Hölderlin Strasse 6, D-6950 Mosbach (DE)**

(74) Vertreter: **Rieger, Harald, Dr., Reuterweg 14, D-6000 Frankfurt am Main (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen aus einer Aluminiumlegierung, vorzugsweise des Typs A 1Sil2CuNiMg, gegossenen Kolben für Brennkraftmaschinen mit im Kolbenboden angebrachter Brennraummulde, in deren radialen Randbereich ein aus einem Keramikwerkstoff mit kleinem Wärmeleitungskoeffizienten, kleinem Wärmeausdehnungskoeffizienten und kleinem Elastizitätsmodul bestehender Hohlzylinderring eingegossen ist.

Bei Brennkraftmaschinen führen die zunehmenden Forderungen nach höherer Leistung pro Zylinder und Erhöhung der Abgastemperatur bei gleichzeitiger Begrenzung bzw. Verringerung der über das Kühlsystem abzuführenden Verlustwärmemenge zur besseren Energieausnutzung des Kraftstoffs durch sekundäre Massnahmen, wie z.B. Abgasturbolader, einerseits zu hohen thermischen Belastungen der Bauteile und verlangen andererseits deren thermische Isolierung.

In neuerer Zeit ist u.a. versucht worden, derartige Beanspruchungen dadurch zu vermeiden, wenigstens jedoch herabzusetzen, dass an aus Leichtmetallwerkstoffen bestehenden Bauteilen von Brennkraftmaschinen in den entsprechend belasteten Zonen aus Keramikwerkstoffen gebildete Schutzelemente angeordnet sind. So ist z.B. bei «Standg J.H.: Designing Adiabatic Engine Components, SEA 780 069» ein Leichtmetallkolben mit aufgeschraubtem, gegenüber der Basis durch Stahlscheiben isoliertem Keramikboden vorgesehen. Mit einem solchen Leichtmetallkolben können Temperaturen um 900°C am Kolbenboden erreicht werden. Nachteilig sind jedoch die Herstellungskosten eines den Festigkeitsanforderungen genügenden Keramik-Schutzelements sowie das relativ grosse Totvolumen oberhalb der ersten Ringnut.

Durch das 9. Statusseminar «Kraftfahrzeuge und Strassenverkehr» des BMFT vom 03. bis 05.11.1981 in Neu-Ulm ist ein Leichtmetallkolben mit im Kolbenboden angeordneter Brennraummulde bekannt geworden, an deren Rand zum Schutz gegen thermische Belastung ein aus einem Keramikwerkstoff mit kleinem Wärmeleitkoeffizienten ($\alpha = 2\,W/mK$), kleinem Wärmeausdehnungskoeffizienten ($\alpha = 1,5 \times 10^{-6}/K$) und kleinem Elastizitätsmodul ($E = 2 \times 10^4 N/mm^2$) bestehender, eine sehr gute thermische Ermüdungsfestigkeit und Thermoschockbeständigkeit besitzender Ring ausreichender Druckfestigkeit aus Aluminiumtitanat ($Al_2TiO_5$) mit eingegossen ist. Durch die Kontraktion des Leichtmetallwerkstoffs beim Erstarren nach dem Giessen entsteht zwischen dem aus einem Keramikwerkstoff bestehenden Ring und dem ihn umgebenden Leichtmetallwerkstoff eine Schrumpfverbindung. Durch die sich daraus ergebenden Druckspannungen werden sowohl der Festsitz des Ringes gewährleistet als auch in dem Ring Druckspannungen erzeugt. Infolge der im Motorbetrieb auftretenden Verformungen des Leichtmetallkolbens ergeben sich im Bereich des Kolbenbodens sowohl Zug- als auch Druckspannungen, wobei sich die dabei in dem Ring auftretenden Zugspannungen den aus der Schrumpfverbindung herrührenden Druckspannungen überlagern. Solange die Druckspannungen in dem Ring grösser als die Zugspannungen sind, ist sichergestellt, dass insgesamt keine oder nur geringe Zugspannungen in dem Ring selbst auftreten. Dieses Verhalten ist für die Dauerhaltbarkeit des Ringes von entscheidender Bedeutung, da Keramikwerkstoffe in der Regel wesentlich grössere Druck- als Zugspannungen bruchfrei ertragen können. So sind z.B. für Aluminiumtitanat nur Zugspannungen $< 40\,N/mm^2$ zulässig, während Druckspannungen bis zum 10-fachen dieses Wertes ohne Bruch ertragen werden. Solange also die Druckspannungen gegenüber den Zugspannungen gross genug sind, ist damit eine ausreichende Sicherheit gegen Bruch und Lockerung des Ringes gegeben. Dies ist jedoch bei längerer Betriebsdauer des Kolbens nicht gewährleistet, da es bei den im Leichtmetallkolben auftretenden Temperaturen von $> 250°C$ schon nach relativ kurzer Betriebsdauer zum Abbau der aus der Schrumpfverbindung stammenden Druckspannungen durch Kriech- und/oder Relaxationsvorgänge kommt, die zur Lockerung bzw. zum Bruch des Ringes und damit zur Beeinträchtigung der Funktion des Leichtmetallkolbens mit allen Folgeschäden führen. So konnte beispielsweise an einem aus der Aluminiumlegierung des Typs AlSil2CuNiMg gegossenen Leichtmetallkolben mit einem am Rand der Brennraummulde eingegossenen, aus Aluminiumtitanat bestehenden Ring nachgewiesen werden, dass die anfängliche, aus der Schrumpfverbindung herrührende Druckspannung von ca. $60\,M/mm^2$ bei einer unter einer Temperatur von $250°C$ erfolgenden konstanten Dehnung nach 100 Stunden auf $20\,N/mm^2$ abgesunken war. Durch die Kriech- und/oder Relaxationsvorgänge in der Aluminiumlegierung kommt es im Ring zu hohen Zugspannungen, die zu Rissen im Ring führen oder zu einer Lockerung des Ringes, was eine Funktionsbeeinträchtigung des Kolbens zur Folge hat. Aus diesem Grunde hat man bisher darauf verzichtet, aus Keramikwerkstoff bestehende Einlagen in thermisch hochbelastete Zonen bzw. zur thermischen Isolierung in aus Leichtmetallwerkstoffen bestehende Bauteile von Brennkraftmaschinen einzugiessen. Aufgabe der vorliegenden Erfindung ist es, bei aus einer Aluminiumlegierung gegossenen Kolben für Brennkraftmaschinen der eingangs beschriebenen Ausbildung eine feste Verbindung zwischen der Aluminiumlegierung und der aus einem keramischen Werkstoff bestehenden hohlzylinderringförmigen Bewehrung des Brennraummuldenrandes zu schaffen.

Die Lösung dieser Aufgabe erfolgt durch einen den Mantel des Hohlzylinderrings umgebenden ringförmigen Faserkörper, der aus Kohlenstoff-, Graphit-, oder Keramikfasern oder aus einem Gemisch von wenigstens zwei dieser Fasermaterialien besteht.

Durch die Faserverstärkung wird eine hohe Kriech- und Relaxationsfestigkeit der Aluminiumlegierung insbesondere bei hohen Betriebstemperaturen und eine feste Verbindung mit der aus einem Keramikwerkstoff bestehenden Einlage erreicht.

Die Keramikfaserkörper bestehen insbesondere aus $Al_2O_3$-, $SiO_2$,- SiC-Fasern.

Zweckmässigerweise sind die Faserkörper aus Geweben, Geflechten, Gestricken, Filzen oder dergl. aufgebaut.

Nach einer Ausführungsart ist der Faserkörper auf den Mantel des Hohlzylinderrings aufgeschrumpft.

Der Hohlzylinderring wird zusammen mit dem Faserkörper vor dem Giessen des Kolbens in die Giessform eingelegt, wobei es sich als zweckmässig erwiesen hat, wenn nach dem Giessen die Aluminiumlegierungsschmelze unter Druck gesetzt und somit besser in die Zwischenräume zwischen den Fasern eindringen kann.

Gegebenenfalls kann es auch angebracht sein, wenn die Faserkörper vor dem Eingiessen mit einer Aluminiumlegierung gleicher oder ähnlicher Zusammensetzung wie diejenige des Kolbens getränkt wird.

Die Verbindung zwischen dem Faserkörper und der Aluminiumlegierung erfolgt durch Anschmelzen der Oberfläche, wobei die trennenden Oxidfilme durch geeignete giesstechnische Massnahmen durchbrochen und weggeschwemmt werden.

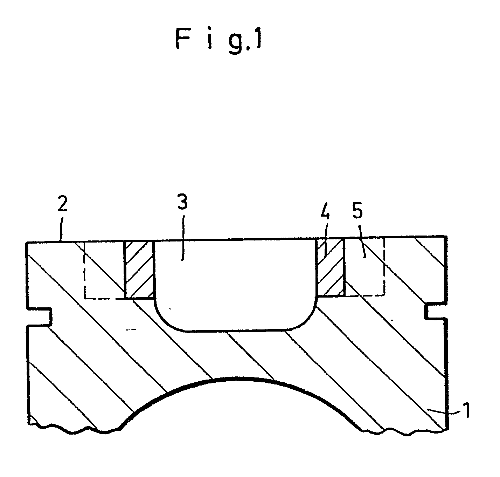

Die Zeichnung, durch die die Erfindung beispielhaft dargestellt ist, zeigt einen Längsschnitt durch den oberen Teil eines aus einer Aluminiumlegierung gegossenen Kolbens (1) mit im Kolbenboden (2) angeordneter Brennraummulde (3), in deren Randbereich ein hohlzylinderförmiger aus Aluminiumtitanat bestehender Ring (4) eingegossen ist. Auf den Mantel (5) des Rings (4) ist ein aus Graphitfasern gebildeter Faserkörper aufgeschrumpft.

**Patentansprüche**

1. Aus einer Aluminiumlegierung, vorzugsweise des Typs AlSil2CuNiMg, gegossener Kolben (1) für Brennkraftmaschinen mit im Kolbenboden (2) angebrachter Brennraummulde (3), an deren radialen Randbereich ein aus einem Keramikwerkstoff mit kleinem Wärmeleitungskoeffizienten, kleinem Wärmeausdehnungskoeffizienten und kleinem Elastizitätsmodul bestehender Hohlzylinderring (4) eingegossen ist, gekennzeichnet durch einen den Mantel des Hohlzylinderrings (4) umgebenden ringförmigen Faserkörper, der aus Kohlenstoff-, Graphit- oder Keramikfasern oder einem Gemisch von wenigstens zwei dieser Fasermaterialien besteht.

2. Kolben nach Anspruch 1, dadurch gekennzeichnet, dass die Keramikfaserkörper aus $Al_2O_3$-, $SiO_2$-, SiC-Fasern bestehen.

3. Kolben nach den Ansprüchen 1 und 2, dadurch gekennzeichnet, dass die Faserkörper aus Geweben, Geflechten, Gestricken, Filzen oder dergl. aufgebaut sind.

4. Kolben nach einem oder mehreren der Ansprüche 1 bis 3, gekennzeichnet durch einen auf den Mantel des Hohlzylinderrings (4) aufgeschrumpften Faserkörper.

**Claims**

1. A piston (1) for internal combustion engines, which has been cast from an aluminium alloy, preferably of the type AlSi12CuNiMg and comprises a piston head (2) formed with a combustion chamber recess (3) and a hollow cylindrical ring (4), which is embedded in the casting adjacent to the radial rim of said recess and consists of a ceramic material which has a low thermal conductivity, a low coefficient of expansion and a low modulus of elasticity, characterized by an annular body of fibrous material, which surrounds the outside peripheral surface of the hollow cylindrical ring (4) and consists of carbon fibres, graphite fibres or ceramic fibres or of a mixture of at least two of said fibrous materials.

2. A piston according to claim 1, characterized in that the ceramic fibrous bodies consist of $Al_2O_3$ fibres, $SiO_2$ fibres, SiC fibres.

3. A piston according to claims 1 and 2, characterized in that the fibrous bodies are composed of woven fabrics, braided fabrics, knitted fabrics, felts or the like.

4. A piston according to any of claims 1 to 3, characterized by a fibrous body which has been shrunk onto the outside peripheral surface of the hollow cylindrical ring (4).

**Revendications**

1. Piston (1) coulé en alliage d'aluminium, de préférence du type AlSil2CuNiMg, et destiné à des moteurs à combustion interne, comprenant une auge formant chambre de combustion (3) qui est ménagée dans la tête du piston (2) et sur la partie marginale radiale de laquelle est coulé un anneau cylindrique creux (4) en un matériau céramique ayant un faible coefficient de conductibilité thermique, un faible coefficient de dilatation thermique et un faible module d'élasticité, caractérisé par un corps fibreux annulaire entourant la face latérale de l'anneau cylindrique creux (4) et constitué de fibres de carbone, de fibres de graphite ou de fibres de céramiques, ou d'un mélange d'au moins deux de ces matériaux fibreux.

2. Piston suivant la revendication 1, caractérisé en ce que les corps en fibres de céramique sont constitués de fibres d'$Al_2O_3$, de fibres de $SiO_2$ ou de fibres de SiC.

3. Piston suivant les revendications 1 et 2, caractérisé en ce que les corps fibreux sont formés de tissus, de tresses, de tricots, de feutres ou de produits semblables.

4. Piston suivant l'une ou plusieurs des revendications 1 à 3, caractérisé par un corps fibreux fretté sur la face latérale de l'anneau cylindrique creux (4).

0 129 266

F i g.1